# EUROPEAN PATENT SPECIFICATION

(11) **EP 0 414 237 B1**
(45) Date of publication and mention of the grant of the patent: **14.05.1997**
(21) Application number: 90116120.8
(22) Date of filing: 22.08.1990
(51) Int. Cl.: G06T 7/00, G01N 21/64

(54) **An image processing equipment**
Bildverarbeitungseinrichtung
Appareil de traitement d'images

(30) Priority: 25.08.1989 JP 219780/89
(43) Date of publication of application: 27.02.1991
(73) Proprietor: HAMAMATSU PHOTONICS K.K., Shizuoka-ken (JP)
(72) Inventor: Uchiyama, Shigeru, Hamamatsu-shi, Shizuoka-ken (JP); Fujiwake, Hideji, Nishikyo-ku, Kyoto-shi, Kyoto-fu (JP); Nakagawa, Iwayo, Hamamatsu-shi, Shizuoka-ken (JP); Hirano, Masahiko, Hamamatsu-shi, Shizuoka-ken (JP); Mizuguchi, Yoshinori, Hamamatsu-shi, Shizuoka-ken (JP); Oishi, Hideshi, Hamamatsu-shi, Shizuoka-ken (JP); Sugiyama, Norikazu, Hamamatsu-shi, Shizuoka-ken (JP)
(74) Representative: Sajda, Wolf E., Dipl.-Phys.

(56) References cited:
- EP-A- 0 207 485
- IEEE TRANSACTIONS ON BIO-MEDICAL ENGINEERING vol. 36, no. 8 , August 1989 , NEW YORK US pages 860 - 864 XP45964 DAVID W. CAPSON ET AL. 'microcomputer-based interactive tracking of blood cells et biomaterial surfaces'

## Description

The present invention relates to an image processing apparatus, wherein a sample such as a sample of cardiomyocytes is subjected to a stimulus so that the change in fluorescence with time can be measured at a high time resolution.

The European Patent Application EP-A-0 207 485 discloses a fluorometer for measuring a particular fluorescence emanating from a specimen after subjecting the specimen to a light pulse. The fluorescence detection is performed at a timing within a particular time period after introduction of the light pulse. The detected fluorescence from the specimen is scanned to generate signals, which are analysed by enhancing a particular portion of the fluorescence signal of interest.

In a conventional image pick up method using a television camera, a sample is subjected to an uninterrupted light emitted by a continuously lit light source lamp; the time resolution for obtaining data cannot be made higher than 1/30 sec.,which is the time required for 1 frame, and thus no higher time resolution is available. No data representing the change with the time corresponding to the duration of the stimulus can be obtained, since the device for giving the stimulus to the sample cannot be synchronized with the television camera. For example the change in Ca²⁺ concentration resulting from the contraction of the cardiomyocyte can be measured by the intensity of the fluorescence of the reagent loaded in the cells. However, the process (of the change in the Ca²⁺ concentration) cannot be observed in detail by the conventional method using the television camera, since the change of contraction of the heart occurs at a rate in the order of milli-seconds.

There is another method using a photomultiplier tube instead of the television camera, wherein the fluorescence at a point within the visual field of the microscope or the fluorescence of many samples put in a cuvette is measured. This method using a photomultiplier enables us to measure the intensity of the fluorescence at a high time resolution, but no two-dimensional analysis of the fluorescence of the sample is possible due to the spot detection.

The object of the present invention is to provide an equipment capable of analyzing the change in the fluorescence at a time resolution in the order of a milli-second or less.

Another object of the present invention is to provide an equipment capable of analyzing the change in the shape of a single cardiomyocyte due to contraction and dynamic behavior of the intracellular Ca²⁺ concentration over time by combining a fluorescence microscope with a television camera.

According to the present invention, an image processing apparatus is provided as defined in claim 1.

In a preferred embodiment, a fluorescent reagent is loaded into a sample of cardiomyocytes to cause the intracellular carboxyl groups to be bonded to the Ca²⁺; the external stimulus is given to the cardiomyocyte; the two pulse excitation light-pulses differing in their wavelengths are given to said cardiomyocyte; and the image of the cardiomyocyte is taken by the high-sensitivity television camera. In this system, the pulse light coincides with the blanking period of the television camera; the stimulus timing is set according to the time of the emission of said pulse excitation light-pulses; the television camera is adapted for taking the image of the sample by scanning for at least one frame out of the blanking period, whereas the image will not be taken while the sample is exposed to the pulse excitation light. This image processing equipment enables the timing of the stimulus to be varied according to various requirements in measuring, the plural number of image data to be stored in the memory, said image data to be re-synthesized for observing the change in the image and the change in the shape of a single cardiomyocyte occurring at the rate in the order of a milli-second due to the contraction of the cardiomyocyte and the concurrent dynamic change in the intracellular Ca²⁺ concentration to be analyzed two-dimensionally.

In the following, preferred embodiments of the invention are explained in detail.
Fig. 1 is a block diagram showing an embodiment of the present invention relating to an image processing equipment.
Fig. 2 is a time chart showing the operations of the equipment according to an embodiment of the present invention.

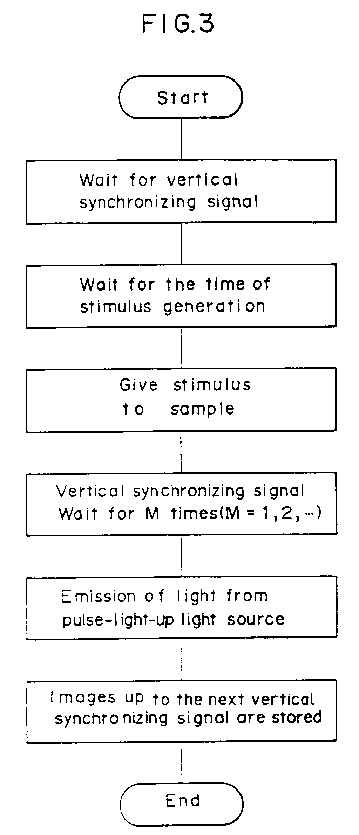

Fig. 3 is a flow chart showing the sequence of the operations of the equipment according to an embodiment of the present invention.

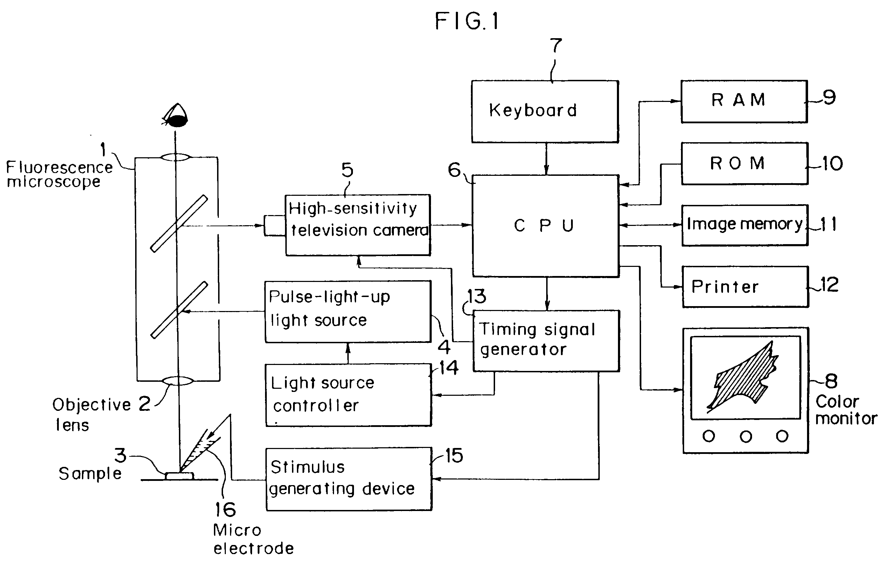

In Fig. 1, 1 represents the fluorescence microscope, wherein the sample 3 such as that of cardiomyocytes with a fluorescent reagent loaded thereinto is placed on the side of an objective lens 2 of the microscope 1. The pulse-light-up light source 4 is provided for irradiating the sample 3 with pulse excitation light-pulses of single wavelength or of different wavelengths. A high-sensitivity television camera 5 is installed on the output side of the fluorescence microscope 1. A CPU 6 comprising an image processor is connected to the output side of the high-sensitivity television camera 5. This CPU 6 is connected to a keyboard 7 for inputting data for processing, a command for analysis and other data. A color monitor 8 is provided for displaying an image analysis menu and the data. A RAM 9 is provided for temporarily storing image data. A ROM 10 is provided for storing programs for the analysis, for processing, for reading and storing the data. An image memory 11 for storing the image data and a printer 12 are provided for printing the measured data. A timing signal generator 13 is provided for generating a timing signal. The timing signal generator 13 generates a drive signal for the sequential-scanning high-sensitivity television camera 5, the timing signal for writing in the image memory 11, a timing signal for a stimulus generator 15 and a pulse-light-up timing signal for a light source controller 14.

The operation of this embodiment having the above-described composition will be explained next in reference to the drawings.

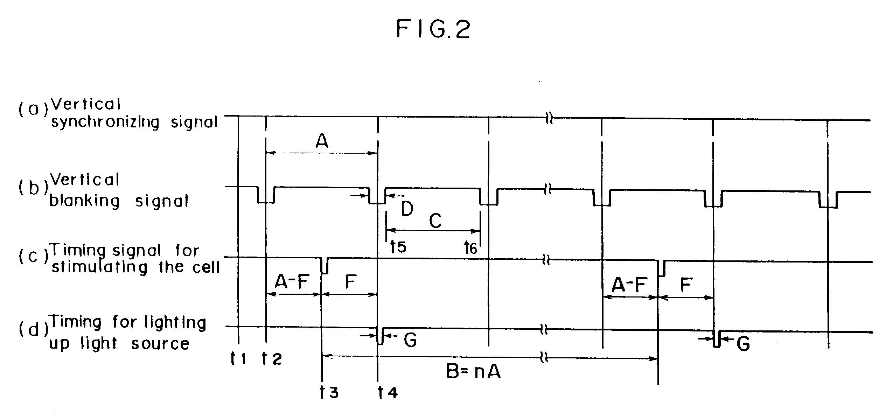

Loading the fluorescent reagent into the sample of the cardiomyocytes 3 causes the intracellular, its carboxyl group to be bonded to the Ca²⁺ in the cardiomyocytes 3. The cardiomyocytes 3 whereinto the fluorescent reagent is injected is set on the side of the objective lens 2 of the fluorescence microscope 1. The measurement is started at a time t₁ shown in Fig. 2. After starting the measurement, the equipment waits until the first vertical synchronizing signal is detected. When the first vertical synchronizing signal is received at a time t₂, the timing signal is generated by the timing signal generator 13 at a time t₃ after a predetermined time (A-F) from the time t₂. The generation of this timing signal causes the stimulus signal to be outputted from the stimulus generating device 15. Here, A represents the period of one vertical synchronizing signal, while F represents the time-interval from t₃ to the next vertical blanking period. The stimulus signal is outputted at the time t₃. This causes a micro electrode 16 to apply a stimulating current to the cardiomyocytes 3. The timing signal is outputted from the timing signal generator 13 at a time t₄, which is in the next vertical blanking period and after the predetermined time period F from the time t₃ for the output of the stimulus signal. This causes through the light source controller 14 the pulse excitation light-pulse from the pulse-light-up light source 4 to be projected on the cardiomyocytes 3. Here, it is essential for the pulse excitation light-pulse to occur during the vertical blanking period D, and this enables the stimulus timing signal to be outputted before the predetermined time of output of the pulse excitation light-pulse. In the above-described embodiment, the time t₃ for outputting the stimulus timing signal is set within one frame (c) of (before) the time t₄ for the timing of the pulse excitation light, but said output time t₃ is not limited within said one frame and thus may be set taking more than one frame, that is a plural number of frames (B = nA).

The cardiomyocyte 3 is irradiated with the excitation lights having different wavelengths, for example the pulse excitation lights (G) of 340 nm and 360 nm or 340 nm and 380 nm, coming from said pulse-light-up light source 4. This causes the flurescent images differing in the intensity of fluorescence depending on the wavelength of the light to be generated by the cardiomyocyte 3, and these fluorescent images are taken by the high-sensitivity television camera 5.

The image signal from said television camera is stored in the image memory 11 through the CPU 6 and displayed on the television monitor 8 or printed by the printer 12. Thus, when the stimulus is given at the time t₃, the image can be obtained after a certain period of time F or at the time t₄. That is, the stimulus is given at the time t₃ preceding to the time t₄ for the light-up or light-pulse of the pulse light source, and, after a certain period of time F, the fluorescent image can be obtained during the period C between the time t₅ and the time t₆ by scanning with the television camera 5. The different images can be obtained by varying the time t₃ for the timing of said stimulus.

The plural number of image data are stored in the image memory 11, and the stored data are accessed by the CPU 6 for analysis. More particularly, the Ca²⁺ condentration is calculated using a calibration graph of the fluorescence ratio and Ca²⁺ (concentration). To obtain this calibration graph, known Ca²⁺ concentrations of some samples are stored in the ROM 10 in advance, and the intensity of fluorescence of the sample is measured by CPU 6 after processing the sample with the fluorescent reagent and two different pulse excitation light-pulses.

In the above-described embodiment, the pulse excitation light is generated during the vertical blanking period D of the frame of 1/30 sec., but, where a faster analysis is required, the pulse excitation light-pulse may be generated during the horizontal blanking period.

## Claims

1. An image processing apparatus for measuring the change in time of a condition of a sample (3) comprising:
a camera (5) for observing the sample (3);
a pulsed light source (4) for emitting pulsed excitation light at a preset time t₄;
a timing signal generator (13) for generating timing signals for said camera (5) and said pulsed light source (4);
characterized in that
said camera (5) is a high-sensitivity television camera and said preset time t₄ of pulsed light emission from said pulsed light source is set to be in the blanking period of the television camera (5);
a stimulus generating device (15, 16) is provided for applying a stimulus to the sample (3) at a time t₃ preceding said preset time t₄ of pulsed light emission by a predetermined time period (F), said timing signal generator (13) adapted to generate a timing signal for said stimulus generating device (15, 16);
control means (6) are provided for image processing, whereby a plurality of images are taken at varying times t₃ of stimulus application with respect to the preset time t₄ of pulsed light emission and whereby the change in condition of the sample (3) is observed by re-synthesizing the whole image.

2. An image processing apparatus according to Claim 1, wherein the pulsed excitation light from the pulsed light source (4) is emitted during the vertical or the horizontal blanking period (D) of the television camera (5).

## Patentansprüche

1. Bildverarbeitungsvorrichtung, um die Änderung eines Zustand einer Probe (3) über die Zeit zu messen, wobei die Vorrichtung folgendes aufweist:
eine Kamera (5), um die Probe (3) zu beobachten;
eine gepulste Lichtquelle (4), um impulsförmiges Anregungslicht zu einer vorgegebenen Zeit t₄ auszusenden;
einen Zeitsteuerungssignalgenerator (13), um Zeitsteuerungssignale für die Kamera (5) und die gepulste Lichtquelle (4) zu erzeugen;
dadurch gekennzeichnet,
daß die Kamera (5) Fernsehkamera hoher Empfindlichkeit ist und die vorgegebene Zeit t₄ der Impulslichtemission von der gepulsten Lichtquelle so vorgegeben ist, daß sie in der Austastperiode der Fernsehkamera (5) liegt;
daß eine Reizimpulserzeugungseinrichtung (15, 16) vorgesehen ist, um an die Probe (3) zu einer Zeit t₃, die der vorgegebenen Zeit t₄ der Impulslichtemission um eine vorgegebene Zeitdauer (F) vorausgeht, einen Reiz anzulegen, wobei der Zeitsteuerungssignalgenerator (13) so ausgebildet ist, daß er ein Zeitsteuerungssignal für die Reizimpulserzeugungseinrichtung (15, 16) erzeugt;
und daß eine Steuereinrichtung (6) für die Bildverarbeitung vorgesehen ist, so daß eine Vielzahl von Bildern zu variablen Zeiten t₃ der Reizimpulsaufbringung in bezug auf die vorgegebene Zeit t₄ der Impulslichtemission aufgenommen wird und daß die Änderung des Zustand der Probe (3) durch erneutes Synthetisieren des Gesamtbilds beobachtet wird.

2. Bildverarbeitungsvorrichtung nach Anspruch 1,
wobei das impulsförmige Anregungslicht von der gepulsten Lichtquelle (4) während der Vertikal- oder der Horizontal-Austastperiode (D) der Fernsehkamera (5) ausgesandt wird.

## Revendications

1. Un appareil de traitement d'image pour mesurer le changement dans le temps d'une condition d'un échantillon (3), comprenant :
- une caméra (5) pour observer l'échantillon (3);
- une source de lumière pulsée (4) pour émettre de la lumière d'excitation pulsée à un instant t₄ préréglé ;
- un générateur de signaux de synchronisation (13) pour générer des signaux de synchronisation pour ladite caméra (5) et ladite source de lumière pulsée (4) ;
caractérisé en ce que
ladite caméra (5) est une caméra de télévision à haute sensibilité et ledit instant t₄ préréglé d'émission de lumière pulsée par ladite source de lumière pulsée est fixé pour se trouver dans la période de suppression de faisceau noir de la caméra de télévision (5) ;
un dispositif générateur de stimulus (15, 16) est prévu pour appliquer un stimulus à l'échantillon (3) à un instant t₃ précédant ledit instant t₄ préréglé d'émission de lumière pulsée pendant une période de temps (F) prédéterminée, ledit générateur de signaux de synchronisation (13) étant adapté pour générer un signal de synchronisation pour ledit dispositif générateur de stimulus (15, 16) ;
des moyens de commande (6) sont prévus pour le traitement d'image, grâce à quoi une pluralité d'images sont prises à des instants t₃ variés d'application de stimulus par rapport à l'instant t₄ préréglé d'émission de lumière pulsée et grâce à quoi le changement de condition de l'échantillon (3) est observé en re-synthétisant la totalité de l'image.

2. Un appareil de traitement d'image selon la revendication 1,
dans lequel la lumière d'excitation pulsée de la source de lumière pulsée (4) est émise pendant la période de suppression de faisceau noir vertical ou horizontal (D) de la caméra de télévision (5).
